# EUROPÄISCHE PATENTSCHRIFT

(11) **EP 4 430 326 B1**
(45) Veröffentlichungstag und Bekanntmachung des Hinweises auf die Patenterteilung: **15.01.2025**
(21) Anmeldenummer: 23701305.7
(22) Anmeldetag: 18.01.2023
(51) Int. Cl.: F16J 15/3208, F16J 15/3212, F16J 15/3216, F16J 15/324, F16J 15/56

(54) **IMPULSABSTREIFER UND ABSTREIFERANORDNUNG**
IMPULSE SCRAPER AND SCRAPER ASSEMBLY
RACLEUR PAR IMPULSION ET ENSEMBLE RACLEUR

(30) Priorität: 23.02.2022 DE 102022201897
(43) Veröffentlichungstag der Anmeldung: 18.09.2024
(73) Patentinhaber: Trelleborg Sealing Solutions Germany GmbH, 70565 Stuttgart (DE)
(72) Erfinder: WILKE, Mandy, 71034 Böblingen (DE); JORDAN, Holger, 73765 Neuhausen a.d.F. (DE)
(74) Vertreter: Kohler Schmid Möbus Patentanwälte
(86) Internationale Anmeldenummer: PCT/EP2023/051061
(87) Internationale Veröffentlichungsnummer: WO 2023/160906

(56) Entgegenhaltungen:
- EP-A1- 3 222 892
- WO-A1-2018/210653
- WO-A1-91/13277
- DE-A1- 102013 018 513
- DE-A1- 2 019 585
- DE-A1- 3 545 168
- DE-U- 6 803 640
- DE-U1- 202012 102 074
- GB-A- 2 242 713
- GB-A- 473 449
- GB-A- 752 324
- JP-U- S5 554 649
- US-A- 2 372 907
- US-A- 2 509 151
- US-A- 5 288 086
- US-A- 6 047 970

## Beschreibung

Die Erfindung betrifft einen Impulsabstreifer gemäß Oberbegriff von Anspruch 1 und eine Abstreiferanordnung mit einem solchen Impulsabstreifer.

Ein derartiger Impulsabstreifer ist beispielsweise durch GB 473 449 A bekannt geworden.

Abstreifer sind in vielen Bereichen der Technik etabliert und dienen insbesondere dazu, Schmutz, Späne, Feuchtigkeit und andere Fremdpartikel von Kolben bzw. Kolbenstangen abzustreifen, bevor diese in den Zylinder zurückfahren. Dies verhindert eine Verschmutzung des Lagerspalts zwischen den Bauteilen, bzw. des hydraulischen Mediums, sowie eine Beschädigung von Führungen, Dichtungen und anderen Komponenten der Abstreiferanordnung. Derlei Abstreiferanordnungen stellen beispielsweise bei Hydrauliksystemen von Kranen und anderen Baumaschinen kritische Bauteile dar. Am Markt sind auch sogenannte Doppel- oder Tandemabstreifer mit zwei oder mehr Abstreiflippen verfügbar, die übereinstimmende oder auch einander entgegengesetzte Hauptwirkrichtungen haben können.

Die genannten Abstreifer müssen in der Materialpaarung mit der abzustreifenden Gegenlauffläche günstige Reibungseigenschaften sowie eine möglichst große Verschleißfestigkeit aufweisen. Die in der Praxis eingesetzten Abstreifer können an der Kolbenstange stark anhaftende Fremdpartikel, insbesondere Eis oder festgetrocknete Verschmutzungen, mitunter nicht oder nur unvollständig von der Kolbenstange abstreifen. In diesem Fall kann es zu besagtem Eintrag der Verunreinigungen in den Lagerspalt kommen.

Der in GB 473 449 A offenbarte einstückige Metall-Abstreifer weist eine äußere Abstreiflippe und zwei innere Abstreiflippen auf, welche voneinander jeweils durch eine dazwischenliegende Ringnut getrennt sind.

Es ist deshalb die Aufgabe der Erfindung, einen Abstreifer sowie eine Abstreiferanordnung anzugeben, bei denen problematische Fremdkörper, die an der abzustreifenden Gegenlauffläche eines Maschinenteils stark anhaften, zuverlässiger abgestreift werden können.

Die den Abstreifer betreffende Aufgabe wird erfindungsgemäß durch einen Impulsabstreifer gemäß Anspruch 1 gelöst. Die Abstreiferanordnung weist die in Anspruch 10 angegebenen Merkmale auf. Weitere Vorteile der Erfindung ergeben sich aus der Beschreibung und der Zeichnung.

Der erfindungsgemäße Impulsabstreifer ist zum Abstreifen eines Fremdkörpers von der Gegenlauffläche eines Maschinenteils, insbesondere einer Kolbenstange, vorgesehen und umfasst einen Halteabschnitt zur Montage des Impulsabstreifers in/an einer Haltestruktur, insbesondere einer Haltenut, eines Maschinenteils. Der Impulsabstreifer umfasst weiter eine Abstreiflippe mit einer bezüglich der Zentralachse des Impulsabstreifers umlaufenden Abstreifkante zum dynamischen Kontaktieren und Abstreifen des Fremdkörpers von der Gegenlauffläche eines anderen Maschinenteils.

Erfindungsgemäß ist die Abstreiflippe in sich elastisch verformbar und weist an ihrer vom Halteabschnitt wegweisenden Umfangsseite eine oder mehrere Ringnut(en) auf, die jeweils eine Soll-Biegezone der Abstreiflippe definieren, wobei durch die Abstreiflippe selbst ein funktioneller Axialanschlag für ein jeweils distal des Axialanschlags angeordnetes Längssegment der Abstreiflippe gebildet ist.

Wird im Betriebseinsatz des Impulsabstreifers - abgeleitet aus der (Rückhub-)Bewegung der Kolbenstange - ein an der Kolbenstange anhaftender Fremdkörper gegen die Abtstreifkante des Impulsabstreifers geführt, so wird dadurch eine axiale Verformung bzw. Auslenkbewegung der Abstreiflippe bewirkt, die schlagartig durch den Axialanschlag begrenzt bzw. gehemmt wird. Dadurch kann mittels der Abstreiflippe ein mechanischer Abstreifimpuls bzw. eine Losbrechkraft auf den Fremdkörper ausgeübt werden. Durch diesen Abstreifimpuls bzw. diese Losbrechkraft können selbst problematische Fremdkörper, die besonders stark an der Kolbenstange anhaften, wie etwa Eis, festgetrockneter Schmutz oder dergleichen, noch zuverlässiger von der Kolbenstange entfernt, d. h. abgestreift, werden. Bei einer Rückhubbewegung der Kolbenstange kann dadurch ein unerwünschter Eintrag solcher Fremdkörper in den Lagerspalt nochmals zuverlässiger verhindert werden. Dies ist insgesamt für die Funktionsfähigkeit und Langlebigkeit einer mit dem Impulsabstreifer versehenen Abstreiferanordnung von Vorteil. Insoweit ist der Impulsabstreifer insbesondere für kritische Anwendungen prädestiniert, bei denen eine Funktionsstörung der Abstreiferanordnung mit Blick auf daraus möglicherweise resultierende Personen- oder Sachschäden, etwa bei Baumaschinen, Kranen oder dergl., unbedingt zu verhindern ist.

Die Abstreifkante kann insbesondere aus einem Material mit einer Shore-Härte zwischen 80 Shore A und 70 Shore D besteht.

Nach einer besonders bevorzugten Weiterbildung der Erfindung weist die Abstreiflippe mehrere Ringnuten auf, die in einer zur Zentralachse des ImpulsAbstreifers axialen Richtung voneinander beabstandet angeordnet sind. Die Ringnuten können dabei eine Tiefe und/oder axiale Breite aufweisen, die sich mit zunehmender Entfernung der jeweiligen Ringnut von der Abstreifkante vergrößert/vergrößern.

Gemäß einer besonders bevorzugten Ausführungsform der Erfindung verjüngt bzw. verengt sich jede Ringnut der Abstreiflippe radial in Richtung des Halteabschnitts. Dadurch kann das Ansprechverhalten der Abstreiflippe bei einer auf die Abstreifkante wirkenden Axialkraft besonders einfach und zuverlässig eingestellt werden.

Zwecks eines nochmals weiter verbesserten Abstreifvermögens des Impulsabstreifers kann die Abstreifkante in Umfangsrichtung des Impulsabstreifers gewellt oder gezackt ausgeführt sein. Dadurch kann die Kontaktfläche der Abstreifkante mit einem Fremdkörper minimiert und besonders große Abstreifkräfte aufgebracht werden.

Der Impulsabstreifer kann weiterhin eine zweite Abstreiflippe aufweisen, die entweder eine mit der ersten Abstreifkante übereinstimmende oder eine zu der ersten Abstreifkante entgegengesetzte Hauptwirkrichtung aufweist. Im erstgenannten Fall kann die Abstreifwirkung des Impulsabstreifers in der Hauptwirkrichtung der ersten Abstreifkante vergrößert und im anderen Fall ein Zurückhalten von bereits in den Lagerspalt eingedrungenen Fremdkörpern bzw. auch des im Lagerspalt angeordneten Schmiermittels erreicht werden.

Existiert zwischen jeweils zweien der Abstreiflippen des Impulsabstreifers ein ringförmiger Freiraum, der sich in radialer Richtung erstreckt, so können dort Fremdkörper und dergleichen gefangen werden. Unter einem Freiraum wird ein Raumvolumen verstanden, in dem kein Bauteil des Impulsabstreifers angeordnet ist.

Die Abstreiflippe kann darüber hinaus ein von der Abstreifkante axial beabstandet angeordnetes Stützelement aufweisen, das sich von der Abstreiflippe in einer radialen Richtung wegerstreckt. Durch ein solches Stützelement kann sich der Impuls-Abstreifer an der Gegenlauffläche abstützen und so einem am Impulsabstreifer angreifenden unerwünschten Kippmoment entgegenwirkt werden. Das Stützelement ist der Abstreiflippe bevorzugt angeformt. Besonders bevorzugt weist das Stützelement eine ballige Querschnittsform auf.

Die erfindungsgemäße Abstreiferanordnung umfasst ein erstes Maschinenteil in Form eines Kolbens oder einer Kolbenstange und ein das erste Maschinenteil umgreifendes zweites Maschinenteil, bevorzugt in Form eines Zylinders. Die beiden Maschinenteile sind unter Ausbildung eines Lagerspalts voneinander beabstandet angeordnet und relativ zueinander entlang einer Bewegungsachse bewegbar. Eines der beiden Maschinenteile weist eine Gleit- oder Gegenlauffläche und das andere der beiden Maschinenteile eine Haltestruktur, insbesondere in Form einer Haltenut, auf, in der der Halteabschnitt eines vorstehend erläuterten Impulsabstreifers gehalten angeordnet ist. Die Abstreiflippe des Impulsabstreifers liegt zumindest abschnittsweise an der Gegenlauffläche des einen Maschinenteils (umlaufend) an.

Weist die Abstreiflippe eine oder mehrere der vorgenannten Ringnuten auf, so kann durch eine Vorhubhubbewegung des einen Maschinenteils ein Einschleppen einer im Lagerspalt angeordneten Schmierflüssigkeit in jede der Materialschwächungen bewirkt sein. Durch eine Rückhubbewegung des Maschinenteils ist schon reibungsbedingt eine Verformung der Abstreiflippe und damit einhergehend ein Auspressen des Schmiermittels aus jeder Ringnut der Abstreiflippe radial in Richtung auf die Gegenlauffläche bewirkt. Jede Ringnut hat insoweit eine Doppelfunktion.

Die Erfindung ist nachstehend anhand von in der Zeichnung wiedergegebenen Ausführungsbeispielen näher erläutert. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1: eine Abstreiferanordnung mit einer Kolbenstange und einem die Kolbenstange umgreifenden Maschinenteil, hier ein Zylinder, sowie mit einem zwischen den beiden Maschinenteilen angeordneten Impulsabstreifer für die Kolbenstange, wobei der Impulsabstreifer eine umfangsseitige Materialschwächung in Form einer Ringkerbe (=Ringnut) aufweist, durch die eine Soll-Biegestelle der Abstreiflippe sowie einen Anschlag für das distal der Ringkerbe angeordnete Längssegment der Abstreiflippe definiert ist, in einer ausschnittsweisen Schnittdarstellung;
- Fig. 2: einen Impulsabstreifer, der sich von dem in Fig. 1 gezeigten Impulsabstreifer im Wesentlichen darin unterscheidet, dass dieser umfangsseitig mehrere voneinander beabstandet angeordnete Materialschwächungen in Form von Ringkerben aufweist, die sich in ihrer Größe voneinander unterscheidet, in einer Schnittdarstellung;
- Fig. 3: einen weiteren (nicht beanspruchten) Impulsabstreifer, bei dem die Abstreiflippe ein Tragelement mit einer exponentiell progressiven Federkennlinie aufweist, in einer ausschnittsweisen Schnittdarstellung;
- Fig. 4: einen weiteren (nicht beanspruchten) Impulsabstreifer, bei dem die Abstreiflippe zwei Abstreifkanten mit einander entgegengerichteter Hauptwirkrichtung und einem Tragelement mit einer exponentiell progressiven Federkennlinie aufweist, in einer ausschnittsweisen Schnittdarstellung;
- Fig. 5: einen weiteren (nicht beanspruchten) Impulsabstreifer, bei dem die Abstreiflippe alleinig über ein Tragelement am Halteabschnitt befestigt ist, wobei das Halteelement eine exponentiell progressive Federkennlinie aufweist und einen funktionellen Anschlag für eine axiale Auslenkbewegung des am Halteabschnitt angelenkten Tragelements sowie der Abstreiflippe bildet;
- Fig. 6: einen weiteren (nicht beanspruchten) Impulsabstreifer, bei dem die Abstreiflippe alleinig über ein Tragelement am Halteabschnitt befestigt ist, wobei das Halteelement eine exponentiell progressive Federkennlinie aufweist und einen funktionellen Anschlag für eine axiale Auslenkbewegung des am Halteabschnitt angelenkten Tragelements sowie der Abstreiflippe bildet, in einer ausschnittsweisen Schnittdarstellung;
- Fig. 7: eine gekerbte Abstreifkante eines Impulsabstreifers in einer perspektivischen Detaildarstellung;
- Fig. 8: eine wellenförmig ausgeführte Abstreifkante eines Impulsabstreifers in einer perspektivischen Detaildarstellung; und
- Fig. 9: eine exponentiell progressive Federkennlinie eines Halteelements gemäß Fig. 5 bzw. eines Tragelements gemäß den Fign. 3, 4 und 6.

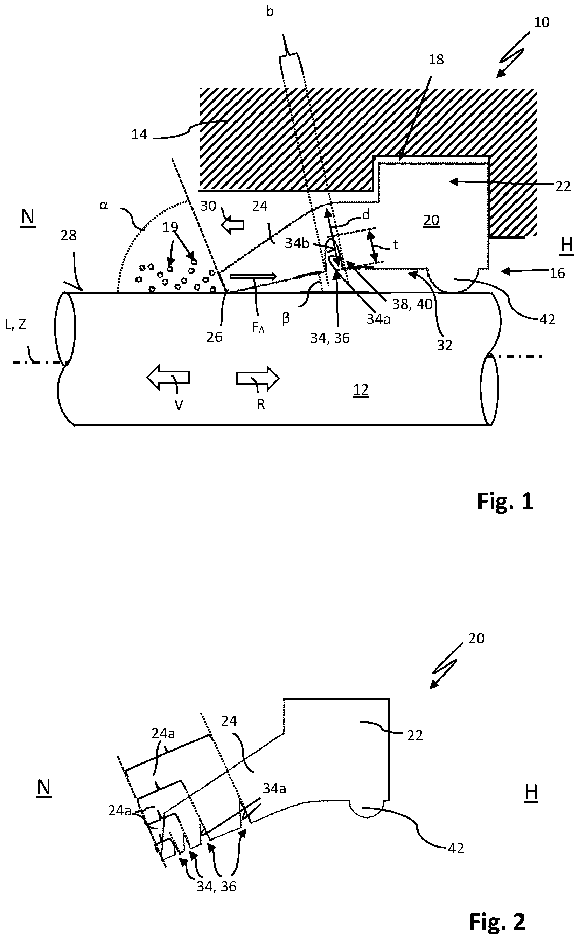

**Fig. 1** zeigt ein erstes Ausführungsbeispiel einer erfindungsgemäßen Abstreiferanordnung **10.** Die Abstreiferanordnung 10 umfasst hier ein erstes Maschinenteil **12,** hier beispielhaft in Form einer Kolbenstange, und ein die Kolbenstange umgebendes zweites Maschinenteil **14,** hier beispielhaft in Form eines Zylinders. Die beiden Maschinenteile 12, 14 sind unter Ausbildung eines zwischen den beiden Maschinenteilen 12, 14 angeordneten Lagerspalts **16** voneinander beabstandet angeordnet. Die Abstreiferanordnung 10 bzw. der Lagerspalt 16 weisen eine Außenseite **N** und eine Innenseite **H** auf. Im Lagerspalt 16 kann ein Schmiermittel (in Fig. 1 nicht gezeigt) angeordnet sein. Das erste Maschinenteil 12 ist hier entlang einer Bewegungsachse **L** relativ zum zweiten Maschinenteil 14 hin- und her bewegbar. Eine Vorhubbewegung der Kolbenstange ist mit **V** und eine Rückhubbewegung der Kolbenstange ist mit **R** bezeichnet.

Das zweite Maschinenteil 14 weist eine Haltestruktur **18** auf, die hier als Haltenut ausgeführt ist. Zum Abstreifen von auf der Kolbenstange anhaftenden Verunreinigungen bzw. Fremdkörpern 19 dient ein Impulsabstreifer **20.**

Der Impulsabstreifer 20 weist einen Montage- oder Halteabschnitt **22** auf, der in der Haltenut des zweiten Maschinenteils 14 angeordnet ist. Vom Halteabschnitt 22 erstreckt sich eine Abstreiflippe **24** in einer zur Zentralachse Z des Impulsabstreifers 20 axialen Richtung weg. Die Abstreiflippe 24 ist hier mit einer einzelnen in Umfangsrichtung des Impulsabstreifers 20 umlaufend geschlossenen Abstreifkante **26** versehen, die dem dynamischen Kontaktieren und Abstreifen der Gegenlauffläche **28** der Kolbenstange dient. Die Abstreifkante 26 weist einen in axialer Richtung zur Außenseite N weisenden Kantenwinkel **a** zwischen 50° und 75° und einen in axialer Richtung zur Innenseite H weisenden Kantenwinkel **β** zwischen 15 und 45° auf. Die funktionelle Hauptwirkrichtung der Abstreifkante ist mit dem Pfeil **30** bezeichnet.

Gemäß Fig. 1 weist die Abstreiflippe 24 an ihrer vom Halteabschnitt 22 wegweisenden, d. h. hier radial innenliegenden, Umfangsseite **32** eine einzelne ringförmig umlaufende Materialschwächung in Form einer Ringnut **34** auf. Die Ringnut 34 weist eine axiale Breite **b** und eine radiale Tiefe **t** von zumindest 30 % der lokalen Dicke **d** der Abstreiflippe 24 auf.

Diese Materialschwächung bzw. Ringnut 34 hat dreierlei Funktionen:
Wird im Betrieb ein an der Gegenlaufläche der Kolbenstange anhaftender Fremdkörper 19 wie etwa Schnee, Späne, Eis, Schmutz und dergleichen bei einer Rückhubbewegung der Kolbenstange gegen die Abstreiflippe geführt, so wird dadurch eine Axialkraft F_{A} auf die Abstreiflippe ausgeübt. Die Materialschwächung dient als eine Soll-Biegezone **36** der Abstreiflippe 24. Durch diese Axialkraft F_{A} ist eine elastische Verformung (= Stauchung) der Abstreiflippe 24 in axialer Richtung sowie ein Verbiegen (Abknicken) der Abstreiflippe 24 vorrangig im Bereich der Soll-Biegezone 36 bewirkt.

Zweitens ist hier durch die Materialschwächung ein integraler Anschlag **38** für das distal, d. h. axial in Hauptwirkrichtung der zugeordneten Abstreifkante, angeordnete Längssegment **24a** der Abstreiflippe 24 gebildet. Der integrale Anschlag 38 ist durch die der Außenseite N zuweisende erste Nutflanke **34a** der Ringnut 34 gebildet. Schlägt das distale Längssegment 24a der Abstreiflippe 24 mit der dem Lagerspalt 16 zuweisenden zweiten Nutflanke **34b** an der gegenüberliegenden ersten Nutflanke 34a an, so wird dadurch einer weiteren axialen Verformung der Abstreiflippe 24 entgegengewirkt. Auf die Abstreifkante 26 wirkt aufgrund des schlagartigen Anstiegs des Widerstands gegenüber einer weiteren Verformung ein aus der Rückhubbewegung R der Kolbenstange abgeleiteter Abstreifimpuls bzw. eine Losbrechkraft ein. Die Dichtlippe verformt sich bei Ablösen des Fremdkörpers 19 bzw. mehrerer Fremdkörper 19 in ihren in Fig. 1 gezeigten Normalbetriebszustand in radialer/axialer Richtung schlagartig zurück. Insgesamt können auf diese Weise Fremdkörper 19 an der Kolbenstange besonders wirksam abgestreift werden. Einem unerwünschten Eintrag von Fremdpartikeln 19 in den Lagerspalt 16 sowie den damit assoziierten Gefahren für eine Beschädigung weiterer Bauteile der Abstreiferanordnung 10 kann dadurch zuverlässig entgegengewirkt werden.

Drittens kann die Materialschwächung als ein Schmiermittelreservoir **40** dienen. Bei einer Vorhubbewegung V der Kolbenstange kann an der Kolbenstange anhaftendes Schmierfluid in die Materialschwächung bzw. Ringnut 34 eingetragen bzw. eingeschleppt werden. Bei einer Rückhubbewegung Rder Kolbenstange kann zumindest ein Teil des in der Materialschwächung bevorrateten Schmierfluids wieder an die Kolbenstange abgegeben werden. Dies insbesondere dann, wenn die Abstreiflippe 24 - bedingt durch eine Reibung zwischen der Abstreifkante 26 und der Gegenlauffläche 28 der Kolbenstange in axialer Richtung verformt wird und es dadurch zu einer Verringerung der axialen Breite b der Materialschwächung, d. h. einem Ausquetschen des Schmierfluids aus der Materialschwächung, kommt. Bei einer nachfolgenden Vorhubbewegung V wird die Materialschwächung dann wieder mit dem Schmiermittel befüllt. Dies ermöglicht eine nochmals bessere umlaufende Schmierung der Kolbenstange bzw. der Abstreiflippe. Einem unerwünschten Anhaften von Flugrost und dergleichen sowie einer Korrosion der Kolbenstange selbst kann dadurch auch bei aus dem zweiten Maschinenteil 14 ausgefahrener Kolbenstange besonders zuverlässig entgegengewirkt werden.

Zu beachten ist, dass der Impulsabstreifer 20 einen Stützabschnitt **42** aufweisen kann, der von der Abstreifkante 26 in axialer Richtung beabstandet angeordnet ist und der (zumindest zeitweise) an der Gegenlauffläche 28 anliegt. Im Betriebseinsatz kann sich der Stützabschnitt 42 an der Gegenlauffläche 28 abstützen und so einem am Impulsabstreifer 20 angreifenden Kippmoment entgegenwirken. Der Stützabschnitt 42 ist hier rein beispielhaft als ein balliger Ringwulst ausgeführt, der keine Dichtwirkung aufweist und in Umfangsrichtung durchaus eine oder mehrere Axialdurchgänge aufweisen kann. Andere geometrische Ausgestaltungen des Stützabschnitts sind ohne weiteres vorstellbar.

Die Abstreiflippe 24 des Impulsabstreifers 20 kann gemäß dem in **Fig. 2** dargestellten Ausführungsbeispiel auch mehrere Materialschwächungen aufweisen, die in axialer Richtung voneinander beabstandet angeordnet sind. Jede der Materialschwächungen ist dabei vorzugsweise als eine Ringnut 34 ausgeführt und weist die vorstehend erläuterten funktionellen Vorteile auf. Jede Materialschwächung bzw. Ringnut 34 der Abstreiflippe 24 kann sich bei Normalbetrieb des Impulsabstreifers 20 in radialer Richtung verengen. Die Tiefe t der Materialschwächungen kann sich mit zunehmender Entfernung der jeweiligen Materialschwächung von der Abstreifkante 26 vergrößern.

Zu beachten ist, dass die Materialschwächung auch durch ein hochkompressibles Weichmaterial mit einem im Vergleich zur übrigen Abstreiflippe 24 kleinen E-Modul gebildet bzw. ausgefüllt sein kann. Hier kommt insbesondere ein offenporiger Elastomerschaum infrage.

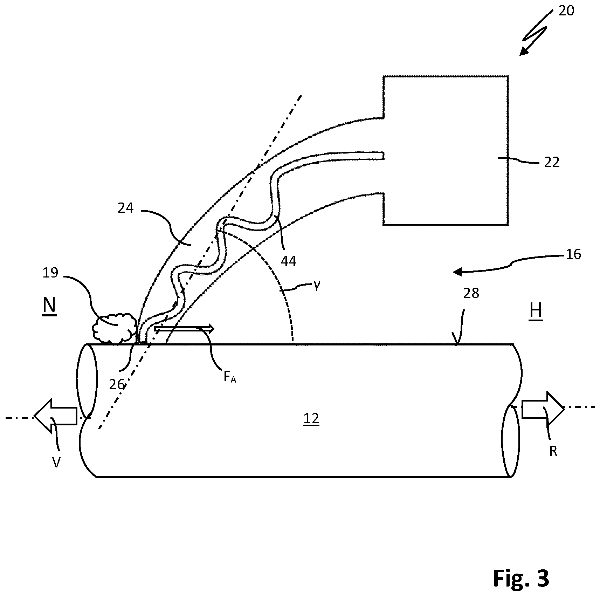

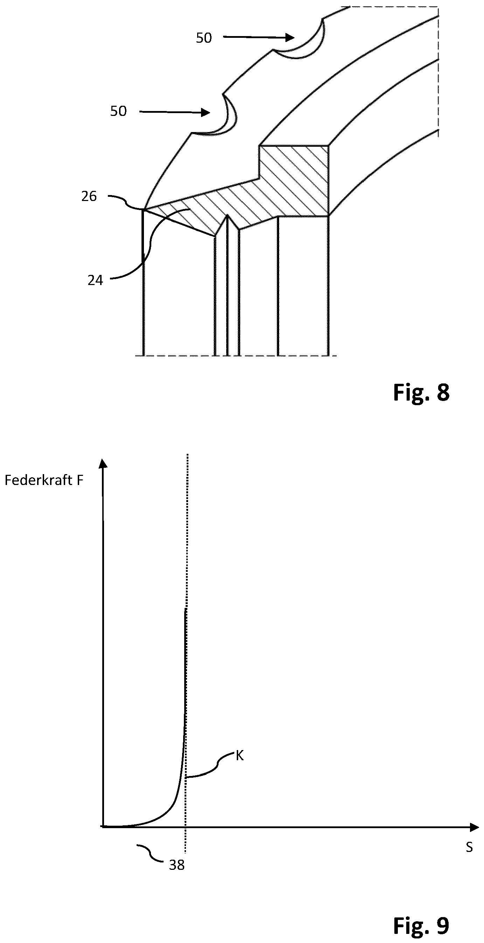

Gemäß dem in **Fig. 3** gezeigten (nicht beanspruchten) Ausführungsbeispiel ist die Abstreiflippe 24 des Impulsabstreifers 20 an einem Tragelement 44 gehalten angeordnet. Das Tragelement 44 kann im Sinne einer Armierungseinlage der Abstreiflippe 24 ausgeführt sein. Die Abstreiflippe kann am Tragelement insbesondere angespritzt sein. Das Tragelement 44 erstreckt sich hier vom Halteabschnitt 22 in einer radialen Richtung bis auf Höhe oder nahezu bis auf Höhe der Abstreifkante 26. Zu beachten ist, dass das Material des Tragelements 44 ein größeres E-Modul aufweisen kann als das Material der übrigen Abstreiflippe 24. Das Tragelement 44 kann Metall 25, Kunststoff und/oder einen Verbundwerkstoff umfassen oder aus einem dieser Materialien bestehen. Das Tragelement 44 ist in sich federelastisch verformbar und weist bezüglich seiner Axialverformung eine exponentiell progressive Federkennline auf, vgl. hierzu auch nachstehende Erläuterungen zu Fig. 8. Das Tragelement 44 dient mithin als ein federelastischer Energiespeicher mit einer progressiven Federkennlinie. Mit anderen Worten steigt die für eine Verformung des Tragelements in axialer Richtung erforderliche Axialkraft F_{A} mit zunehmender Verformung des Tragelements schlagartig an. Dadurch ist funktionell ein Axialanschlag für die Axialverformung des Tragelements 44 und somit einer axialen Auslenkbewegung der Abstreiflippe 24 in Richtung der Innenseite H bewirkt, durch die auf einen an der Kolbenstange anhaftenden Fremdkörper - abgeleitet aus der Rückhubbewegung der Kolbenstange - ein Abstreifimpuls bzw. ein Losbrechmoment ausgeübt werden kann.

Übersteigt die Federkraft des Tragelements 44 die Axialkraft F_{A} im Zeitpunkt des Abstreifens (Loslösens) des an der Kolbenstange anhaftenden Fremdkörpers 19, so schnellt die Abstreiflippe 24 axial in Richtung der Außenseite N in ihre in Fig. 3 gezeigte Betriebsstellung zurück.

Die Abstreifkante 26 kann im Querschnitt eine zur Außenseite hin konvexe bogenlinienförmige Grundform aufweisen und im gezeigten Normalbetriebszustand mit der Gegenlauffläche 28 der Kolbenstange einen Winkel **y** mit vorzugsweise 60° ≤ y ≤ 80° einschließen.

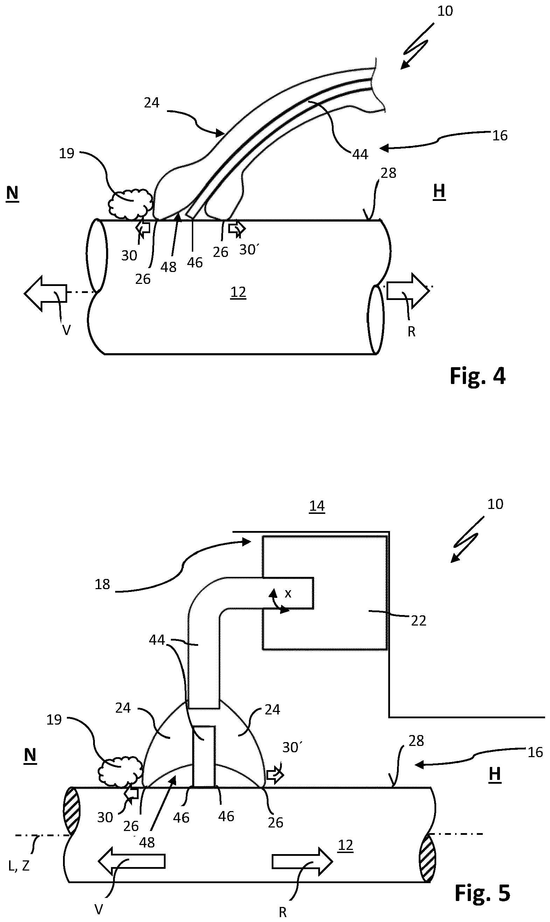

Bei dem in **Fig. 4** gezeigten Detailausschnitt eines (nicht beanspruchten) Impulsabstreifers 20 im Montagezustand ist das Tragelement 44 ebenfalls als eine federelastisch verformbare Armierungseinlage des zähelastischen Materials der Abstreiflippe 24 ausgeführt. Das Tragelement 44 ist hier im Querschnitt mit einer bogenförmig gekrümmten Querschnittsform ausgeführt. Die Abstreiflippe 24 weist eine zweite Abstreifkante 26 auf, die zu der ersten Abstreifkante 26 axial in Richtung zur Innenseite H versetzt angeordnet ist. Beide Abstreifkanten 26 bestehen aus demselben Material. Die zweite Abstreifkante 26 weist eine der außengerichteten Hauptwirkrichtung 30 der ersten Abstreifkante 26 entgegengerichtete innengerichtete Hauptwirkrichtung **30'** auf.

Zu beachten ist, dass das Tragelement 44 selbst eine Wirkkante **46** mit Abstreiffunktion aufweisen kann. Die Wirkkante 46 berührt die Gegenlauffläche 28 im Normalbetrieb vorzugsweise nicht, um Schäden an der Gegenlauffläche zu vermeiden. Insoweit ist die Wirkkante vorzugsweise mit einem nur geringen Abstand (in Fig. 4 nicht bezeichnet) beispielsweise von unter 1 Millimeter, von der Gegenlauffläche 28 beabstandet angeordnet. Dadurch kann dem Eintrag von an dem ersten Maschinenteil 12 (= Kolbenstange) anhaftenden größeren, insbesondere harten, Fremdkörpern 19 in den Lagerspalt 16 nochmals zuverlässiger entgegengewirkt werden. Weist die Abstreiflippe 24 einen zwischen der ersten und zweiten Abstreifkante 26 ausgebildeten Freiraum 48 auf, so können derlei Fremdkörper 19, die die erste Abstreifkante 26 überwunden haben, sowie auch Schmiermittel dort aufgenommen bzw. deponiert werden.

In **Fig. 5** ist ein weiterer (nicht beanspruchter) Impulsabstreifer 20 gezeigt, bei dem die Abstreiflippe 24 über ein Tragelement 44 gehaltert ist. Das Tragelement 44 ist einenends am Halteabschnitt 22 des Impulsabstreifers 20 federelastisch auslenkbar angelenkt. Das Tragelement 44 kann gegenüber den im Betrieb des Impulsabstreifers auftretenden Axialkräften F_{A} biegesteif, d. h. im Wesentlichen unverformbar oder gemäß dem im Zusammenhang mit Fig. 4 erläuterten Ausführungsbeispiel eine exponentiell progressive Federkennlinie aufweisen. Hier ist der Halteabschnitt 22 jedenfalls in sich elastisch verformbar und weist gegenüber einer Verformung eine exponentiell progressive Federkennlinie auf. Bei dem in Fig. 5 gezeigten Ausführungsbeispiel ist somit der Axialanschlag einer (Auslenk-)Bewegung der Abstreiflippe in axialer Richtung funktionell durch den Halteabschnitt 22 bewirkt. Der Halteabschnitt 22 kann insbesondere ein Elastomer umfassen bzw. aus einem solchen bestehen.

Die Abstreiflippe 24 kann eine erste und eine zweite Abstreifkante 26 aufweisen, deren Hauptwirkrichtungen 30, 30' einander entgegengerichtet sein können. Der Impulsabstreifer ist somit als ein sogenannter Doppelabstreifer ausgebildet. Die Abstreiflippe 24 sowie vorzugsweise auch der Halteabschnitt bestehen aus einem gummielastisch oder einem zähelastisch verformbaren Material. Die Shore-Härte des Weichmaterials kann insbesondere zwischen 80 Shore A und 70 Shore D betragen.

Das Tragelement 44 erstreckt sich in radialer Richtung soweit in einen zwischen den beiden Abstreifkanten 26 ausgebildeten Freiraum 48 hinein, dass das Tragelement 44 nahezu die Gegenlauffläche 28 der Kolbenstange berührt.

Wird bei diesem Impulsabstreifer 20 ein an der Gegenlauffläche 28 anhaftender Fremdkörper 19 bei einer Rückhubbewegung R der Kolbenstange gegen die außenseitig angeordnete Abstreifkante 26/Abstreiflippe 24 geführt, so resultiert dies in einer an der Abstreifkante 26 angreifenden Axialkraft F_{A}. Durch diese Axialkraft F_{A} ist eine elastische Auslenkung des Tragelements mitsamt der Abstreiflippe 24 relativ zum Halteabschnitt 22 bewirkt. Dadurch wird hier die Abstreifkante 26 verstärkt gegen die Gegenlauffläche 28 geschwenkt. Bei Erreichen des funktionellen Anschlags, d. h. sprunghaftem Anstieg der zum Verformen des Halteelements erforderlichen Kraft, wird mittels der Abstreiflippe 24 ein Abstreifimpuls bzw. eine Losbrechkraft auf den Fremdkörper 19 ausgeübt. Übersteigt die Federkraft des Halteelements 22 im Moment des Losbrechens des Fremdkörpers 19 von der Gegenlauffläche 28 die Axialkraft F_{A}, so schnellt das Tragelement 44 mitsamt der Abstreiflippe 24 in axialer Richtung in seine in Fig. 5 gezeigte Ausgangsstellung zurück.

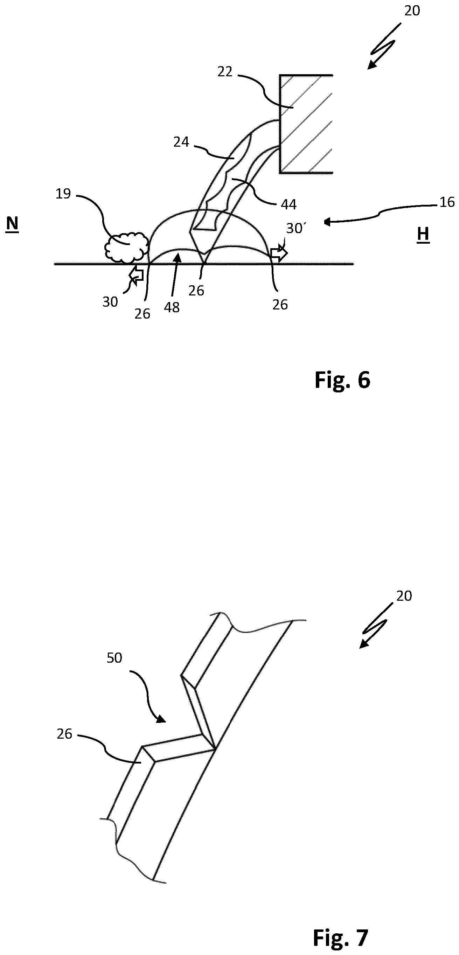

Bei dem in **Fig. 6** gezeigten (nicht beanspruchten) Ausführungsbeispiel kann das Tragelement 44, das hier in einer zu dem in Fig. 4 gezeigten Ausführungsbeispiel entsprechenden Weise bogenförmig verlaufend ausgeführt ist und als eine federelastisch verformbare Armierungseinlage der Abstreiflippe 24 dient, aus Metall, einem zähelastischen Hartkunststoff oder einem Verbundmaterial bestehen. Die Shore-Härte des Materials des Tragelements 44 kann beispielsweise zwischen 95 Shore A und bis 70 Shore D betragen. Die Abstreiflippe 24 weist hier drei Abstreifkanten 26 auf, die in axialer Richtung voneinander beabstandet angeordnet sind und einander entgegengerichtete Hauptwirkrichtungen 30, 30' aufweisen. Das Material der Abstreiflippe ist im Vergleich zum Tragelement vorzugsweise weicher bzw. zähelastisch verformbar.

Gemäß den **Fign. 7** und **8** kann die Abstreifkante 26 der Abstreiflippe 24 jeweils gekerbt bzw. wellenförmig ausgeführt sein und Vertiefungen **50** aufweisen. Dadurch kann die Abstreiffunktion der Abstreiflippe 24, insbesondere bezüglich besonders harter bzw. an der Gegenlauffläche besonders fest anhaftender Fremdkörper, nochmals weiter verbessert werden.

**Fig. 9** zeigt beispielhaft eine exponentiell progressive Kennlinie **K** des federelastisch ausgebildeten Tragelements 44 gemäß den Fign. 3, 4 und 6 bzw. des federelastischen Halteabschnitts 22 gemäß Fig. 5, durch die der vorstehend erläuterte funktionelle Anschlag **38** bewirkt bzw. gebildet ist.

## Patentansprüche

1. Impulsabstreifer (20) zum Abstreifen eines Fremdkörpers (19) von der Gegenlauffläche (28) eines Maschinenteils, umfassend einen Halteabschnitt (22) zur Montage des Impulsabstreifers (20) in einer Haltestruktur (19) eines Maschinenteils (12, 14) und eine sich in einer zur Zentralachse (Z) des Impulsabstreifers (20) axialen Richtung weg vom Halteabschnitt (22) erstreckende Abstreiflippe (24) mit einer zur Zentralachse (Z) des Impulsabstreifers (20) umlaufenden Abstreifkante (26) zum dynamischen Kontaktieren und Abstreifen des Fremdkörpers (19) von der Gegenlauffläche (28) eines anderen Maschinenteils (12, 14),
wobei die Abstreiflippe (24) in sich elastisch verformbar ist und an ihrer vom Halteabschnitt (22) wegweisenden, radial innenliegenden Umfangsseite eine oder mehrere, bevorzugt ringförmig umlaufende, Ringnut(en) (34) aufweist, **dadurch gekennzeichnet,**
**dass** durch die Ringnut(en) (34) jeweils eine Soll-Biegezone (36) der Abstreiflippe (24) definiert ist, und dass durch die der Abstreifkante (26) zuweisende, erste Nutflanke (34a) der Ringnut (34) ein Axialanschlag (38) für die gegenüberliegende, zweite Nutflanke (34a) der Ringnut (34) eines jeweils distal des Axialanschlags (38) angeordneten Längssegments (24a, 24b) der Abstreiflippe (24) gebildet ist, derart, dass eine an der Abstreiflippe (24) in axialer Richtung hin zum Halteabschnitt (22) angreifende Axialkraft (F_{A}), welche durch einen an der Gegenlauffläche (28) anhaftenden Fremdkörper (19) bewirkt ist, zu einer Auslenkung der Abstreiflippe (24) vorrangig im Bereich der Soll-Biegezone (36) bis zur Anlage der zweiten Nutflanke (24b) an der ersten Nutflanke (34a) führt.

2. Impulsabstreifer gemäß Anspruch 1, **dadurch gekennzeichnet, dass** die Abstreifkante (26) aus einem Material mit einer Härte zwischen 80 Shore A und 70 Shore D besteht.

3. Impulsabstreifer gemäß einem der vorhergehenden Ansprüche, **dadurch gekennzeichnet, dass** die Abstreifkante (26) gewellt oder gezackt ausgeführt ist.

4. Impulsabstreifer gemäß einem der vorhergehenden Ansprüche, **dadurch gekennzeichnet, dass** der Impulsabstreifer (20) mehrere Abstreiflippen (24) und/oder Abstreifkanten (26) aufweist.

5. Impulsabstreifer gemäß Anspruch 4, **dadurch gekennzeichnet, dass** eine erste und eine zweite Abstreiflippe (24) einander entgegengesetzte Hauptwirkrichtungen (30, 30') aufweisen.

6. Impulsabstreifer gemäß Anspruch 1, **dadurch gekennzeichnet, dass** die Abstreiflippe (24) mehrere Ringnuten (34) aufweist, die in axialer Richtung voneinander beabstandet angeordnet sind.

7. Impulsabstreifer gemäß Anspruch 6, **dadurch gekennzeichnet, dass** sich jede Ringnut (34) der Abstreiflippe (24) in einer radialen Richtung verengt.

8. Impulsabstreifer gemäß Anspruch 7, **dadurch gekennzeichnet, dass** die Ringnuten (34) jeweils eine radiale Tiefe (t) aufweisen, die sich mit zunehmender Entfernung von der Abstreifkante (26) vergrößert.

9. Impulsabstreifer gemäß einem der vorhergehenden Ansprüche **dadurch gekennzeichnet, dass** der Impulsabstreifer (20) einen von der Abstreifkante (26) axial beabstandet angeordneten Stützabschnitt (42) aufweist, um im Betriebseinsatz des Impulsabstreifers (20) unter Abstützung an der Gegenlauffläche (28) einem am Impulsabstreifer (20) angreifenden Kippmoment entgegenzuwirken.

10. Abstreiferanordnung (10) umfassend ein erstes Maschinenteil (12) und ein das erste Maschinenteil (12) umgreifendes zweites Maschinenteil (14), die unter Ausbildung eines Lagerspalts (16) voneinander beabstandet angeordnet sind, wobei eines der beiden Maschinenteile (12, 14) eine Haltestruktur (18) aufweist, in der ein Impulsabstreifer (20) gemäß einem der vorhergehenden Ansprüche gehalten angeordnet ist, und wobei die zumindest eine Abstreiflippe (24) des Impulsabstreifers (20) an der Gegenlauffläche (28) des jeweils anderen Maschinenteils (12, 14) dynamisch kontaktierend anliegt, wobei durch einen an der Gegenlauffläche (28) anhaftenden Fremdkörper (19) eine an der Abstreiflippe (24) angreifende Axialkraft (F_{A}) bewirkt ist, die zu einer Verformung und/oder Auslenkung der Abstreiflippe (24) in axialer Richtung relativ zum Halteabschnitt (22) führt, bis durch den Axialanschlag (38) ein auf den Fremdkörper (19) wirkender mechanischer Abstreifimpuls bewirkbar ist, um den Fremdkörper (19) von der Gegenlauffläche abzustreifen.

11. Abstreiferanordnung (10) gemäß Anspruch 10, **dadurch gekennzeichnet, dass** die Ringnut (34) der Abstreiflippe (24) als ein Schmiermittelreservoir (40) dient und bei einer Relativbewegung der beiden Maschinenteile (12, 14) reibungsbedingt eine Verformung oder Stauchung der Abstreiflippe (24) und damit einhergehend ein Auspressen des Schmiermittels aus der Ringnut (34) radial in Richtung auf das die Gegenlauffläche (28) aufweisende Maschinenteil (12, 14) bewirkt ist.

## Claims

1. An impulse scraper (20) for scraping a foreign particle (19) off the mating running surface (28) of a machine part, comprising a holding section (22) for mounting the impulse scraper (20) in a holding structure (19) of a machine part (12, 14), and a scraper lip (24), extending away from the holding section (22) in an axial direction with respect to the central axis (Z) of the impulse scraper (20), with a scraper edge (26), extending around the central axis (Z) of the impulse scraper (20), for dynamically contacting and scraping the foreign particle (19) off the mating running surface (28) of another machine part (12, 14),
wherein the scraper lip (24) is intrinsically elastically deformable and, on its radial inner peripheral side facing away from the holding section (22), has one or more, preferably ring-shaped circumferential, annular groove(s) (34), **characterized in that**
the annular groove(s) (34) each define a predetermined bending zone (36) of the scraper lip (24), and the first groove flank (34a) of the annular groove (34) which faces the scraper edge (26) forms an axial stop (38) for the opposite second groove flank (34b) of the annular groove (34) of a longitudinal segment (24a, 24b) of the scraper lip (24) arranged distally with respect to the axial stop (38), such that an axial force (F_{A}) which acts on the scraper lip (24) in the axial direction towards the holding section (22) and is caused by a foreign particle (19) adhering to the mating running surface (28), leads to a deflection of the scraper lip (24) primarily in the region of the predetermined bending zone (36) until the second groove flank (34b) abuts the first groove flank (34a).

2. The impulse scraper as claimed in claim 1, **characterized in that** the scraper edge (26) consists of a material with a hardness of between 80 Shore A and 70 Shore D.

3. The impulse scraper as claimed in any one of the preceding claims, **characterized in that** the scraper edge (26) is of wavy or serrated design.

4. The impulse scraper as claimed in any one of the preceding claims, **characterized in that** the impulse scraper (20) has a plurality of scraper lips (24) and/or scraper edges (26).

5. The impulse scraper as claimed in claim 4, **characterized in that** a first and a second scraper lip (24) have mutually opposite main directions of action (30, 30').

6. The impulse scraper as claimed in claim 1, **characterized in that** the scraper lip (24) has a plurality of annular grooves (34), which are arranged spaced apart in the axial direction.

7. The impulse scraper as claimed in claim 6, **characterized in that** each annular groove (34) of the scraper lip (24) narrows in a radial direction.

8. The impulse scraper as claimed in claim 7, **characterized in that** the annular grooves (34) each have a radial depth (t) which increases with increasing distance from the scraper edge (26).

9. The impulse scraper as claimed in any one of the preceding claims, **characterized in that** the impulse scraper (20) has a supporting section (42) arranged at an axial distance from the scraper edge (26) in order to counteract a tilting moment acting on the impulse scraper (20) while being supported on the mating running surface (28) during the operational use of the impulse scraper (20).

10. A scraper arrangement (10) comprising a first machine part (12) and a second machine part (14) which fits around the first machine part (12), which machine parts (12, 14) are arranged spaced apart, forming a bearing gap (16), wherein one of the two machine parts (12, 14) has a holding structure (18) in which an impulse scraper (20) as claimed in any one of the preceding claims is arranged in such a way as to be held, and wherein the at least one scraper lip (24) of the impulse scraper (20) rests against the mating running surface (28) of the respective other machine part (12, 14) while making dynamic contact, wherein a foreign particle (19) adhering to the mating running surface (28) causes an axial force (F_{A}) acting on the scraper lip (24), which leads to deformation and/or deflection of the scraper lip (24) in the axial direction relative to the holding section (22) until a mechanical scraping impulse acting on the foreign particle (19) can be brought about by the axial stop (38) in order to scrape the foreign particle (19) off the mating running surface.

11. The scraper arrangement (10) as claimed in claim 10, **characterized in that** the annular groove (34) of the scraper lip (24) serves as a lubricant reservoir (40) and, owing to friction, a deformation or compression of the scraper lip (24) and, associated with this, pressing of the lubricant out of the annular groove (34) radially in the direction of the machine part (12, 14) that has the mating running surface (28) is brought about during a relative movement of the two machine parts (12, 14).

## Revendications

1. Racleur à impulsion (20) permettant d'enlever par raclage un corps étranger (19) de la surface antagoniste (28) d'une pièce de machine, comprenant une section de retenue (22) permettant le montage du racleur à impulsion (20) dans une structure de retenue (19) d'une pièce de machine (12, 14) et une lèvre de raclage (24) qui s'étend dans une direction s'éloignant de la section de retenue (22) dans une direction axiale par rapport à l'axe central (Z) du racleur à impulsion (20) et qui présente une arête de raclage (26) périphérique par rapport à l'axe central (Z) du racleur à impulsion (20) afin de venir en contact dynamique et d'enlever par raclage le corps étranger (19) de la surface antagoniste (28) d'une autre pièce de machine (12, 14),
la lèvre de raclage (24) étant elle-même élastiquement déformable et présentant, sur son côté périphérique radialement intérieur opposé à la section de retenue (22), une ou plusieurs rainure(s) annulaire(s) (34), de manière préférée périphériquement annulaire(s), **caractérisé en ce que**
la ou les rainure(s) annulaire(s) (34) défini(ssen)t respectivement une zone de flexion de consigne (36) de la lèvre de raclage (24), et **en ce que** le premier flanc de rainure (34a) de la rainure annulaire (34) orienté vers l'arête de raclage (26) forme une butée axiale (38) pour le second flanc de rainure (34a) opposé de la rainure annulaire (34) d'un segment longitudinal (24a, 24b), agencé respectivement de manière distale par rapport à la butée axiale (38), de la lèvre de raclage (24), de telle manière qu'une force axiale (FA), agissant sur la lèvre de raclage (24) dans la direction axiale vers la section de retenue (22) et provoquée par un corps étranger (19) adhérant à la surface antagoniste (28), conduit à une déviation de la lèvre de raclage (24) principalement dans la région de la zone de flexion de consigne (36) jusqu'à ce que le second flanc de rainure (24b) s'appuie contre le premier flanc de rainure (34a).

2. Racleur à impulsion selon la revendication 1, **caractérisé en ce que** l'arête de raclage (26) est constituée d'un matériau présentant une dureté comprise entre 80 Shore A et 70 Shore D.

3. Racleur à impulsion selon l'une quelconque des revendications précédentes, **caractérisé en ce que** l'arête de raclage (26) est ondulée ou dentelée.

4. Racleur à impulsion selon l'une quelconque des revendications précédentes, **caractérisé en ce que** le racleur à impulsion (20) présente plusieurs lèvres de raclage (24) et/ou arêtes de raclage (26).

5. Racleur à impulsion selon la revendication 4, **caractérisé en ce que** des première et seconde lèvres de raclage (24) présentent des directions d'action principale (30, 30') opposées l'une à l'autre.

6. Racleur à impulsion selon la revendication 1, **caractérisé en ce que** la lèvre de raclage (24) présente plusieurs rainures annulaires (34) qui sont espacées les unes des autres dans la direction axiale.

7. Racleur à impulsion selon la revendication 6, **caractérisé en ce que** chaque rainure annulaire (34) de la lèvre de raclage (24) se rétrécit dans une direction radiale.

8. Racleur à impulsion selon la revendication 7, **caractérisé en ce que** les rainures annulaires (34) présentent respectivement une profondeur radiale (t) qui augmente avec l'augmentation de la distance par rapport à l'arête de raclage (26).

9. Racleur à impulsion selon l'une quelconque des revendications précédentes, **caractérisé en ce que** le racleur à impulsion (20) présente une section de support (42) agencée à distance axiale de l'arête de raclage (26) afin de contrer un couple de basculement agissant sur le racleur à impulsion (20) lorsque le racleur à impulsion (20) est appuyé sur la surface antagoniste (28) au cours de son utilisation.

10. Ensemble racleur (10) comprenant une première pièce de machine (12) et une seconde pièce de machine (14) entourant la première pièce de machine (12), qui sont agencées à distance les unes des autres en formant une fente de palier (16), une des deux pièces de machine (12, 14) présentant une structure de retenue (18) dans laquelle est agencé un racleur à impulsion (20) selon l'une quelconque des revendications précédentes, et la au moins une lèvre de raclage (24) du racleur à impulsion (20) étant en contact dynamique avec la surface antagoniste (28) de l'autre pièce de machine (12, 14), un corps étranger (19) qui adhère à la surface antagoniste (28) créant une force axiale (FA) qui agit sur la lèvre de raclage (24) et conduit à une déformation et/ou une déviation de la lèvre de raclage (24) dans la direction axiale par rapport à la section de retenue (22) jusqu'à ce qu'une impulsion de raclage mécanique agissant sur le corps étranger (19) soit provoquée par la butée axiale (38) afin d'enlever par raclage le corps étranger (19) de la surface antagoniste.

11. Ensemble racleur (10) selon la revendication 10, **caractérisé en ce que** la rainure annulaire (34) de la lèvre de raclage (24) sert de réservoir de lubrifiant (40) et une déformation ou une compression de la lèvre de raclage (24), et par conséquent une pression du lubrifiant hors de la rainure annulaire (34) radialement en direction de la pièce de machine (12, 14) présentant la surface antagoniste (28), est provoquée du fait du frottement lorsqu'il y a un mouvement relatif entre les deux pièces de machine (12, 14).
